(19) Europäisches Patentamt
European Patent Office
Office européen des brevets

(11) EP 2 136 332 A1

# (12) EUROPEAN PATENT APPLICATION

published in accordance with Art. 153(4) EPC

(43) Date of publication:
**23.12.2009 Bulletin 2009/52**

(21) Application number: **08740465.3**

(22) Date of filing: **09.04.2008**

(51) Int Cl.:
***G06T 7/00*** *(2006.01)* ***G06F 21/20*** *(2006.01)*

(86) International application number:
**PCT/JP2008/057380**

(87) International publication number:
**WO 2008/126935 (23.10.2008 Gazette 2008/43)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.04.2007 JP 2007103315**

(71) Applicant: **Sony Corporation**
**Tokyo 108-0075 (JP)**

(72) Inventors:
- **ABE, Hiroshi**
  **Tokyo 108-0075 (JP)**
- **MOHAMMAD, Abdul Muquit**
  **Tokyo 108-0075 (JP)**

(74) Representative: **Mills, Julia et al**
**D Young & Co**
**120 Holborn**
**London EC1N 2DY (GB)**

## (54) ALIGNMENT METHOD, ALIGNMENT DEVICE AND PROGRAM

(57) A position alignment method, a position alignment device, and a program in which processing load can be reduced are proposed. A group of some points in a first set of points extracted from an object appearing in one image and a group of some points in a second set of points extracted from an object appearing in another image are used as a reference, and the second set of points is aligned with respect to the first set of points. Thereafter, all the points in the first set of points and all the points in the aligned second set of point are used as a reference, and the second set of points is aligned with respect to the first set of points.

FIG. 7

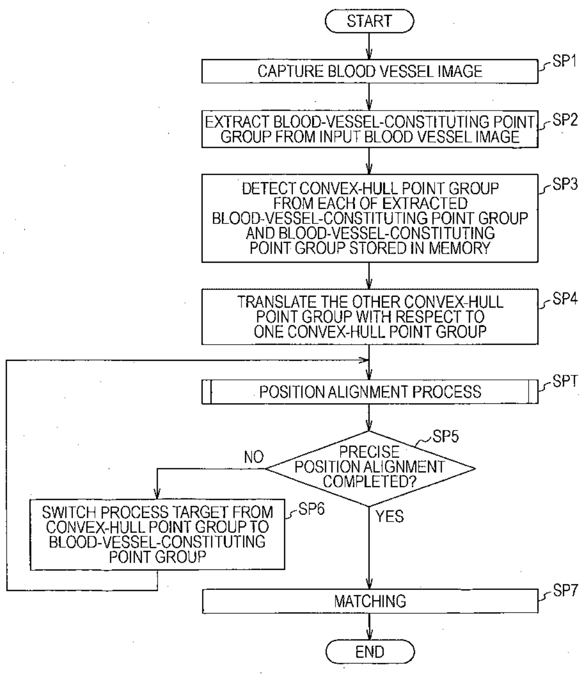


EP 2 136 332 A1

**Description**

Technical Field

The present invention relates to a position alignment method, a position alignment device, and a program, and is suitable for use in biometric authentication.

Background Art

Conventionally, one of biometric authentication objects is blood vessel. In an authentication device of this type, blood vessel appearing in an image registered in a memory and blood vessel appearing in an input image are aligned with each other, and it is determined whether or not the aligned blood vessels coincide with each other to verify the identity of a registrant (see, for example, Patent Document 1).

Patent Document 1: Japanese Unexamined Patent Application Publication No. 2006-018395.

Cross-correlation is generally used for this position alignment, and a large amount of integration or accumulated addition is needed for the calculation of the correlation coefficient. Further, in order to determine a matching position, it is necessary to calculate correlation coefficients for all pixels constituting an image, resulting in a problem in that position alignment involves heavy processing load.

Disclosure of Invention

The present invention has been made taking the above points into consideration, and is intended to propose a position alignment method, a position alignment device, and a program in which processing load can be reduced.

In order to solve the above problem, the present invention provides a position alignment method configured to include a first step of aligning, using as a reference a group of some points in a first set of points extracted from an object appearing in one image and a group of some points in a second set of points extracted from an object appearing in another image, the second set of points with respect to the first set of points; and a second step of aligning, using as a reference all points in the first set of points and all points in the second set of points aligned in the first step, the second set of points with respect to the first set of points.

The present invention further provides a position alignment device configured to include a work memory, and a position alignment unit that aligns one input image and another image with each other using the work memory, wherein the position alignment unit aligns, using as a reference a group of some points in a first set of points extracted from an object appearing in the one image and a group of some points in a second set of points extracted from an object appearing in the other image, the second set of points with respect to the first set of points, and aligns, using as a reference all points in the first set of points and all points in the aligned second set of points, the second set of points with respect to the first set of points.

Further, the present invention provides a program configured to cause a position alignment unit that aligns one input image and another image with each other using a work memory to execute aligning, using as a reference a group of some points in a first set of points extracted from an object appearing in the one image and a group of some points in a second set of points extracted from an object appearing in the other image, the second set of points with respect to the first set of points, and aligning, using as a reference all points in the first set of points and all points in the aligned second set of points, the second set of points with respect to the first set of points.

According to the present invention, therefore, since a stage for performing rough position alignment on a set of points extracted from an object using as a reference a group of some points in this set has been performed, the load of searching for a position alignment position can be reduced by a reduction in the number of the position alignment references. Further, since rough position alignment has been performed, the load of searching for a position alignment position can be reduced as compared with when position alignment is performed without performing this stage. Therefore, the load of searching for a position alignment position can be significantly reduced as compared with when position alignment is performed on all pixels constituting an image. Accordingly, a position alignment method, a position alignment device, and a program in which processing load can be reduced can be realized.

Brief Description of Drawings

Fig. 1 is a block diagram showing an overall configuration of an authentication device according to the present embodiment.

Fig. 2 includes schematic views of images before and after pattern extraction, in which part (A) shows a captured image and part (B) shows a pattern-extracted image.

Fig. 3 includes schematic views of images before and after detection of convex hull points, in which part (A) shows that before the detection and part (B) shows that after the detection.

Fig. 4 includes schematic views for the explanation of translation of the convex hull points.

Fig. 5 is a schematic view showing a state where blood-vessel-constituting point groups are aligned with each other using one of the blood-vessel-constituting point groups and some points in the other blood-vessel-constituting point group.

Fig. 6 is a schematic view showing a state where blood-vessel-constituting point groups are aligned with each other using one of the blood-vessel-constituting point groups and all the points in the other blood-vessel-constituting point group.

Fig. 7 is a flowchart showing an authentication process procedure.

Fig. 8 is a flowchart showing a position alignment process procedure.

Fig. 9 is a schematic view showing the processing time for the first to third stages, the processing time for the first to fourth stages, and the processing time required for performing only the fourth stage in accordance with a deviation angle.

Fig. 10 is a schematic view showing a state where the entirety of a blood-vessel-constituting point group is aligned without performing rough position alignment using some points in the blood-vessel-constituting point group.

Fig. 11 includes schematic views of images before and after detection of minimal circumscribed rectangle points, in which part (A) shows that before the detection and part (B) shows that after the detection.

Fig. 12 is a schematic view for the explanation of position alignment on a blood-vessel-constituting point group using minimal circumscribed rectangle points as a reference.

Fig. 13 includes schematic views of images before and after detection of branching points and bending points, in which part (A) shows that before the detection and part (B) shows that after the detection.

Best Mode for Carrying Out the Invention

An embodiment to which the present invention is applied will be described in detail hereinafter with respect to the drawings.

(1) Overall Configuration of Authentication Device

Fig. 1 shows an overall configuration of an authentication device 1 according to the present embodiment. The authentication device 1 is configured by connecting an operation unit 11, an image capturing unit 12, a memory 13, an interface 14, and a notification unit 15 to a control unit 10 via a bus 16.

The control unit 10 is configured as a computer including a CPU (Central Processing Unit) that manages the overall control of the authentication device 1, a ROM (Read Only Memory) in which various programs, setting information, and the like are stored, and a RAM (Random Access Memory) serving as a work memory of the CPU.

The control unit 10 receives an execution command COM1 of a mode (hereinafter referred to as a blood vessel registering mode) for registering the blood vessel of a user to be registered (hereinafter referred to as a registrant) or an execution command COM2 of a mode (hereinafter referred to as an authentication mode) for verifying the identity of the registrant from the operation unit 11 in accordance with a user operation.

The control unit 10 is configured to determine a mode to be executed on the basis of the execution command COM1 or COM2 and to control the image capturing unit 12, the memory 13, the interface 14, and the notification unit 15 as necessary according to a program corresponding to this determination result to execute the blood vessel registering mode or the authentication mode.

The image capturing unit 12 has a camera that uses an image capturing space above a region where a finger is placed within a housing of the authentication device 1, and adjusts a lens position of an optical system in the camera, the aperture value of an aperture, and the shutter speed (exposure time) of an image capturing element using, as a reference, setting values set by the control unit 10.

The image capturing unit 12 further has a near-infrared light source that irradiates the image capturing space with near-infrared light, and causes the near-infrared light source to emit light for a period specified by the control unit 10. In addition, the image capturing unit 12 captures a subject image shown on an image capturing surface of the image capturing element at every predetermined cycle, and sequentially outputs image data relating to images generated as image capturing results to the control unit 10.

The memory 13 is formed of, for example, a flash memory, and is configured to store or read data specified by the control unit 10.

The interface 14 is configured to give and receive various data to and from an external device connected via a predetermined transmission line.

The notification unit 15 is formed of a display unit 15a and an audio output unit 15b, and the display unit 15a displays characters or figures based on display data given from the control unit 10 on a display screen. The audio output unit 15b, on the other hand, is configured to output audio based on audio data given from the control unit 10 from speakers.

(1-1) Blood Vessel Registering Mode

Next, the blood vessel registering mode will be explained. When the blood vessel registering mode is determined as the mode to be executed, the control unit 10 switches the operation mode to the blood vessel registering mode, and causes the notification unit 15 to notify that a finger is to be placed in the image capturing space.

At this time, the control unit 10 causes the camera in the image capturing unit 12 to perform an image capturing operation, and also causes the near-infrared light source in the image capturing unit 12 to perform a light emission operation.

In this state, when a finger is placed in the image capturing space, near-infrared light that has passed through the inside of the finger from the near-infrared light source is incident, as light for projecting the blood vessel, on the image capturing element through the optical system and the aperture in the camera, and an image of the blood vessel inside the finger is projected on the image capturing surface of the image capturing element. Therefore, in this case, the blood vessel appears in an image based on image data generated as an image capturing result obtained in the image capturing unit 12.

The control unit 10 applies pre-processing such as image rotation correction, noise removal, and image cutting as desired to the image data given from the image capturing unit 12, and extracts, from an image obtained as a result of the pre-processing, the shape pattern of the blood vessel appearing in the image. Then, the control unit 10 generates this blood-vessel shape pattern as data to be identified (hereinafter referred to as identification data), and stores the data in the memory 13 for registration.

In this manner, the control unit 10 is configured to be capable of executing the blood vessel registering mode.

(1-2) Authentication Mode

Next, the authentication mode will be explained. When the authentication mode is determined as the mode to be executed, the control unit 10 switches the operation mode to the authentication mode, and causes the notification unit 15 to notify that a finger is to be placed in the image capturing space. In addition, the control unit 10 causes the camera in the image capturing unit 12 to perform an image capturing operation, and also causes the near-infrared light source to perform a light emission operation.

The control unit 10 further applies pre-processing such as image rotation correction, noise removal, and image cutting as desired to the image data given from the image capturing unit 12, and extracts a blood-vessel shape pattern from an image obtained as a result of the pre-processing in the same manner as that in the blood vessel registering mode.

Then, the control unit 10 is configured to match (pattern matching) the extracted blood-vessel shape pattern with the blood-vessel shape pattern represented by the identification data stored in the memory 13, and to determine whether or not the identity of the registrant can be authenticated in accordance with the degree of similarity between the patterns, which is obtained as a result of the matching.

Here, when it is determined that the identity of the registrant cannot be authenticated, the control unit 10 provides a visual and audio notification about the determination through the display unit 15a and the audio output unit 15b. On the other hand, when it is determined that the identity of the registrant can be authenticated, the control unit 10 sends data indicating that the identity of the registrant has been authenticated to a device connected to the interface 14. In this device, using as a trigger the data indicating that identity of the registrant has been authenticated, a predetermined process to be executed at the time of the success of the authentication is performed, such as, for example, locking a door for a certain period or canceling the operation mode of the object to be limited.

In this manner, the control unit 10 is configured to be capable of executing the authentication mode.

(2) Specific Content of Processes Performed in Control Unit

Next, the specific content of processes performed in the control unit 10 will be explained in details in the context of a blood-vessel shape pattern extraction process and a shape-pattern matching process, by way of example.

(2-1) Extraction of Blood-Vessel Shape Pattern

The control unit 10 highlights, using a differentiation filter such as a Gaussian filter or a Log filter, the contour of an object appearing in an image to be extracted, and converts the image with the contour highlighted into a binary image using a set luminance value as a reference.

The control unit 10 further extracts the center of the width or the luminance peak of the width of a blood vessel part appearing in the binary image to represent the blood vessel as a line (hereinafter referred to as a blood vessel line).

Here, Fig. 2 shows example images before and after extraction of the blood vessel line. As is also apparent from Fig. 2, the image before the extraction (Fig. 2(A)) is obtained as a binary image (Fig. 2(B)) in which the blood vessel part appearing in the image is patterned into a line.

The control unit 10 is further configured to detect end points, branching points, and bending points among points (pixels) constituting the blood vessel line appearing in the binary image as points (hereinafter referred to as feature points) reflecting the features of the blood vessel line, and to extract a set of all or some of the detected feature points (hereinafter referred to as a blood-vessel-constituting point group) as a blood-vessel shape pattern.

(2-2) Shape-Pattern Matching

The control unit 10 aligns the blood-vessel shape pattern (blood-vessel-constituting point group) extracted in the authentication mode with the blood-vessel shape pattern (blood-vessel-constituting point group) represented by the identification data stored in the memory 13 (Fig. 1).

Then, when among the feature points in one of the blood-vessel-constituting point groups aligned with each other and the feature points in the other blood-vessel-constituting point group, for example, the proportion of the number of feature points that coincide is equal to or greater than a predetermined threshold value, the control unit 10 determines that the identity of the registrant can be authenticated. On the other hand, when the proportion of the number of feature points that coincide is less than the threshold value, the control unit 10 is configured to determine that the identity of the registrant cannot be authenticated.

(2-3) Position Alignment on Blood-Vessel-Constituting Point Group

Here, an example of a position alignment technique in this embodiment will be explained in detail.

(2-3-1) First Stage

In the first stage, as shown in, for example, Fig. 3, the control unit 10 detects, from one blood-vessel-constituting point group (Fig. 3(A)), a group of points. (hereinafter referred to as a first convex-hull point group) constituting the vertices of a minimal polygon (hereinafter referred to as a convex hull (convex-hull)) including this blood-vessel-constituting point group (Fig. 3(B)). In Fig. 3, the blood vessel line is also shown for convenience.

Similarly, the control unit 10 detects, from the other blood-vessel-constituting point group, a plurality of points (hereinafter referred to as a second convex-hull point group) constituting the vertices of the convex hull.

When the first convex-hull point group is detected from the one blood-vessel-constituting point group, the control unit 10 detects a center point (hereinafter referred to as a first convex-hull center point) of the convex hull constituted by the first convex-hull point group. When the second convex-hull point group is detected from the other blood-vessel-constituting point group, the control unit 10 detects a center point (hereinafter referred to as a second convex-hull center point) of the convex hull constituted by the second convex-hull point group.

(2-3-2) Second Stage

In the second stage, as shown in, for example, Fig. 4, the control unit 10 individually translates the second convex-hull point group so that the first convex-hull center point and the second convex-hull center point coincide with each other.

Specifically, the control unit 10 calculates the amount of translation of the second convex-hull center point with respect the first convex-hull center point. Then, the control unit 10 is configured to move each point in the second convex-hull point group by this amount of translation. (2-3-3) Third Stage In the third stage, as shown in, for example, Fig. 5, the control unit 10 roughly aligns the other blood-vessel-constituting point group with respect to the one blood-vessel-constituting point group so that the relative distance between each point in the first convex-hull point group and each point in the second convex-hull point group becomes less than a threshold value. In Fig. 5, the blood vessel line is also shown for convenience. In Fig. 5, further, the one blood-vessel-constituting point group (blood vessel line) and the other blood-vessel-constituting point group (blood vessel line) have been extracted from the same finger of the same person.

Specifically, the control unit 10 searches for the moving position of the second convex-hull point group with respect to the first convex-hull point group in the order of, for example, rotational movement and translation.

That is, the control unit 10 sets the position of second convex-hull point group at the present time as an initial position, and sets the second convex hull center at the initial position as the center of rotation. The control unit 10 then rotationally moves the second convex-hull point group in steps of a predetermined amount of rotational movement within a preset rotational movement range, and searches for, for example, a position where the sum (hereinafter referred to as an evaluation value) of squared distances between the individual points in the second convex-hull point group and the respective points in the first convex-hull point group, which are closest to the individual points, is minimum.

Then, the control unit 10 is configured to, when the position of the second convex-hull point group where the evaluation value is minimum in this rotational movement is found, perform translation, using the found position as a reference, in steps of a predetermined amount of translation within a preset translation range to search for a position of the second convex-hull point group where the evaluation value is minimum.

Further, when the position of the second convex-hull point group where the evaluation value is minimum in this translation is found, the control unit 10 recognizes the magnitude of an evaluation value (hereinafter referred to as a previous evaluation value) obtained in the previous search in the order of rotational movement and translation with respect to the found evaluation value (hereinafter referred to as a current evaluation value).

A case where the current evaluation value is smaller than the previous evaluation value means that the next evaluation value will likely be further small, that is, there is a possibility that the second convex-hull point group can further approach the first convex-hull point group. In this case, the control unit 10 sets the position of the second convex-hull point group at which the current evaluation value is obtained as an initial position, and searches for the moving position of the second convex-hull point group with respect to the first convex-hull point group again in the order of rotational movement and translation.

Incidentally, there is no previous evaluation value when the moving position of the second convex-hull point group with respect to the first convex-hull point group is first searched for. In this case, similarly to the case where the current evaluation value is smaller than the previous evaluation value, the position of the second convex-hull point group corresponding to the current evaluation value is set as an initial position, and the moving position of the second convex-hull point group with respect to the first convex-hull point group is searched for again in the order of rotational movement and translation.

On the other hand, a case where the current evaluation value is greater than the previous evaluation value means that the next evaluation value will likely be great, that is, the probability that the second convex-hull point group will be far away from the first convex-hull point group is high. In this case, the control unit 10 determines whether or not the current evaluation value is less than a predetermined threshold value. Incidentally, it may also be determined whether or not the previous evaluation value is less than the predetermined threshold value.

A case where the current evaluation value is equal to or greater than the threshold value means that the subsequent processing becomes useless because the probability that the second convex-hull point group can further approach the first convex-hull point group is low even though the moving position of the second convex-hull point group with respect to the first convex-hull point group is searched for again thereafter, resulting in a high probability that it is determined that the identity of the registrant cannot be authenticated in the matching process. In this case, therefore, the control unit 10 stops the subsequent processing.

On the other hand, a case where the current evaluation value is less than the predetermined threshold value means that the second convex-hull point group exists at a position that is sufficiently close to that of the first convex-hull point group, that is, position alignment has been performed. In this case, the control unit 10 determines the position of the second convex-hull point group, which is found when the current evaluation value is obtained, to be the moving position of the second convex-hull point group with respect to the first convex-hull point group. Then, the control unit 10 is configured to move the other blood-vessel-constituting point group including the second convex-hull point group by the amount of movement between the currently determined moving position of the second convex-hull point group and the position of the second convex-hull point group before its movement.

In the case of this embodiment, the control unit 10 is configured to calculate the above amount of movement using the homogeneous coordinate system (homogeneous coordinate).

That is, the control unit 10 defines points before and after movement by using a one-dimensionally expanded coordinate system, and cumulatively multiplies a transformation matrix, which is obtained when this coordinate system is represented by a matrix, each time a position after rotational movement and a position after translation are searched for.

That is, a transformation matrix obtained when a position after the first rotational movement is searched for is multiplied by a transformation matrix obtained when translation is performed in the second stage; a transformation matrix obtained when a position after the first translation is searched for is multiplied by a resulting multiplication result; a transformation matrix obtained when a position after the second rotational movement is searched for is multiplied by a resulting multiplication result; and a transformation matrix obtained when a position after the second translation is searched for is multiplied by a resulting multiplication result.

Then, when the moving position of the second convex-hull point group with respect to the first convex-hull point group is determined, the control unit 10 multiplies the other blood-vessel-constituting point group by a transformation matrix obtained as a multiplication result when this moving position is determined, and returns the other blood-vessel-constituting point group obtained after this multiplication has been performed to the coordinate system before its one-dimensional expansion.

In this manner, the control unit 10 is configured to calculate the amount of movement using the homogeneous coordinate system, and to multiply the other blood-vessel-constituting point group by the calculated amount of movement so that the position of the other blood-vessel-constituting point group can be moved.

Here, with regard to the movement of the other blood-vessel-constituting point group, a comparison is made between a case where a transformation matrix for moving each point in the other blood-vessel-constituting point group to the moving destination is calculated using a coordinate system one-dimensionally expanded into the coordinate system of the point before and after movement and a case where the transformation matrix is not calculated using the one-dimensionally expanded coordinate system.

In this embodiment, the points before and after movement are in a two-dimensional coordinate system. Therefore, when the points before and after movement are one-dimensionally expanded, if the point before movement is denoted by (x, y, 1) and the point after movement is denoted by (u, v, 1), the rotational movement is given by the following equation:

$$\begin{bmatrix} u \\ v \\ 1 \end{bmatrix} = \begin{bmatrix} \cos\theta & \sin\theta & 0 \\ -\sin\theta & \cos\theta & 0 \\ 0 & 0 & 1 \end{bmatrix} \begin{bmatrix} x \\ y \\ 1 \end{bmatrix} \quad \cdots\cdots (1)$$

The translation is given by the following equation:

$$\begin{bmatrix} u \\ v \\ 1 \end{bmatrix} = \begin{bmatrix} 1 & 0 & \Delta x \\ 0 & 1 & \Delta y \\ 0 & 0 & 1 \end{bmatrix} \begin{bmatrix} x \\ y \\ 1 \end{bmatrix} \quad \cdots\cdots (2)$$

When this rotational movement and translation are repeatedly executed many times, the point after movement is given by the following equation:

$$\begin{aligned} \begin{bmatrix} u \\ v \\ 1 \end{bmatrix} &= \begin{bmatrix} \cos\theta_k & \sin\theta_k & 0 \\ -\sin\theta_k & \cos\theta_k & 0 \\ 0 & 0 & 1 \end{bmatrix} \begin{bmatrix} 1 & 0 & \Delta x_k \\ 0 & 1 & \Delta y_k \\ 0 & 0 & 1 \end{bmatrix} \cdots \begin{bmatrix} \cos\theta_1 & \sin\theta_1 & 0 \\ -\sin\theta_1 & \cos\theta_1 & 0 \\ 0 & 0 & 1 \end{bmatrix} \begin{bmatrix} 1 & 0 & \Delta x_1 \\ 0 & 1 & \Delta y_1 \\ 0 & 0 & 1 \end{bmatrix} \begin{bmatrix} x \\ y \\ 1 \end{bmatrix} \\ &= \begin{bmatrix} a_{11} & a_{12} & a_{13} \\ a_{21} & a_{22} & a_{23} \\ a_{31} & a_{32} & a_{33} \end{bmatrix} \begin{bmatrix} x \\ y \\ 1 \end{bmatrix} \end{aligned} \quad \cdots\cdots (3)$$

As is also apparent from the above equations, a transformation matrix obtained when the points before and after movement are one-dimensionally expanded is represented by, for both rotational movement and translation, the "product" of the "3 x 3" matrices with respect to the points before movement (Equation 1, Equation 2).

Therefore, even when rotational movement and translation are performed many times in the intermediate process before the moving position of the second convex-hull point group with respect to the first convex-hull point group has been determined, the amount of movement for moving the other blood-vessel-constituting point group including the second convex-hull point group can be obtained using a consistent calculation technique (Equation 3) that only requires the integration of a "3 x 3" transformation matrix to the immediately preceding result.

Consequently, it is only required to multiply each point in the other blood-vessel-constituting point group including the second convex-hull point group by a transformation matrix obtained at the time when the moving position of the second convex-hull point group with respect to the first convex-hull point group is determined in order to collectively move the other blood-vessel-constituting point group to the position at the moving destination.

On the other hand, when the points before and after movement are used as they are without being one-dimensionally expanded, if the point before movement is denoted by (x, y) and the point after movement is denoted by (u, v), the rotational movement is given by the following equation:

$$\begin{bmatrix} u \\ v \end{bmatrix} = \begin{bmatrix} \cos\theta & \sin\theta \\ -\sin\theta & \cos\theta \end{bmatrix} \begin{bmatrix} x \\ y \end{bmatrix} \quad \cdots\cdots (4)$$

The translation is given by the following equation:

$$\begin{bmatrix} u \\ v \end{bmatrix} = \begin{bmatrix} x \\ y \end{bmatrix} + \begin{bmatrix} \Delta x \\ \Delta y \end{bmatrix} \quad \cdots\cdots (5)$$

As is also apparent from the above equations, a transformation matrix obtained when the points obtained before and after movement are not one-dimensionally expanded is represented by, for rotational movement, the "product" with respect to the point before movement (Equation 4), and by, for translation, the "sum" with respect to the point before movement (Equation 5).

Therefore, in order to determine the moving position for the second convex-hull point group without representing the points before and after movement using the one-dimensionally expanded coordinate system, a simple calculation technique such as simply integrating a transformation matrix to the immediately preceding result is not adopted.

Consequently, in order to move the other blood-vessel-constituting point group to the position at the moving destination, it is required to store such as transformation matrices and the order thereof in the rotational movement and translation which have been performed in the intermediate process before the moving position of the second convex-hull point group with respect to the first convex-hull point group has been determined, and to multiply each of the points in the other blood-vessel-constituting point group by the respective transformation matrices in this order. Further, the amount of accumulation of calculation errors is greater than that when the other blood-vessel-constituting point group is collectively moved to the position at the moving destination by single multiplication.

In this manner, the control unit 10 is configured to cumulatively multiply a transformation matrix, which is obtained when the points before and after movement are represented by a matrix for a one-dimensionally expanded coordinate system, each time a position after rotational movement and a position after translation are searched for, thereby reducing the processing load required before the other blood-vessel-constituting point group has been moved as compared with when the points are not defined in the one-dimensionally expanded coordinate system. In addition, the other blood-vessel-constituting point group can be accurately moved.

(2-3-4) Fourth Stage

In the fourth stage, when the other blood-vessel-constituting point group is roughly aligned with respect to the one blood-vessel-constituting point group, as shown in, for example. Fig. 6, the control unit 10 precisely aligns the other blood-vessel-constituting point group with respect to the one blood-vessel-constituting point group using the same technique as that in the third stage so that the relative distance between all the points in the one blood-vessel-constituting point group and all the points in the other blood-vessel-constituting point group becomes less than a threshold value. In Fig. 6, the blood vessel line is also shown for convenience. In Fig. 6, further, the one blood-vessel-constituting point group (blood vessel line) and the other blood-vessel-constituting point group (blood vessel line) have been extracted from the same finger of the same person.

(3) Authentication Process Procedure

Next, an authentication process procedure performed in the control unit 10 in the authentication mode will be explained.

As shown in Fig. 7, when the execution command COM2 is given from the operation unit 11 (Fig. 1), the control unit 10 starts this authentication process procedure RT1. In step SP1, the control unit 10 controls the image capturing unit 12 (Fig. 1) to obtain image data for which blood vessel appears as a result of the image capture performed in the image capturing unit 12.

Next, in step SP2, the control unit 10 applies predetermined pre-processing to this image data, and thereafter extracts a blood-vessel-constituting point group (Fig. 2) from an image obtained as a result of the processing. Subsequently, in step SP3, the control unit 10 detects a convex-hull point group and a convex-hull center point (Fig. 3) from each of the blood-vessel-constituting point group and the blood-vessel-constituting point group stored as identification data in the memory 13 (Fig. 1).

Then, the control unit 10 proceeds to the next step, step SP4, in which the control unit 10 individually translates the second convex-hull point group (Fig. 4) so that the first convex-hull center point and the second convex-hull center point coincide with each other. Thereafter, in a subsequent position alignment process routine SRT, the other blood-vessel-constituting point group is roughly aligned (Fig. 5) with respect to the one blood-vessel-constituting point group.

That is, as shown in Fig. 8, in step SP11, the control unit 10 sets the position of the second convex-hull point group at the present time as an initial position, and sets the second convex hull center at the initial position as the center of rotation. The control unit 10 then rotationally moves the second convex-hull point group in steps of a predetermined amount of rotational movement within a preset rotational movement range, and searches for a position of the second convex-hull point group where the evaluation value is minimum. Thereafter, the control unit 10 proceeds to step SP12, in which the control unit 10 performs translation, using the found position as a reference, in steps of a predetermined amount of translation within a preset translation range, and searches for a position of the second convex-hull point group where the evaluation value is minimum.

Then, in step SP13, the control unit 10 determines whether or not the search performed in steps SP11 and SP12 is the first search. When the search is the second or later search, then in step SP14, the control unit 10 determines whether or not the current evaluation value obtained by the current search is greater than the previous evaluation value obtained by the search preceding this search.

Here, when it is determined that the search is the first search or that the current evaluation value is smaller than the previous evaluation value, there is a possibility that the second convex-hull point group can further approach the first convex-hull point group. Thus, the control unit 10 sets the position of the second convex-hull point group at which the current evaluation value is obtained as an initial position, and searches for the moving position of the second convex-hull point group with respect to the first convex-hull point group again in the order of rotational movement and translation.

On the other hand, when it is determined that the current evaluation value is greater than the previous evaluation value, the probability that the second convex-hull point group will be far away from the first convex-hull point group is high. Thus, the control unit 10 proceeds to the next step, step SP15, in which the control unit 10 determines whether or not the current evaluation value is less than a predetermined threshold value.

When it is determined that the current evaluation value is greater than or equal to the threshold value, the probability that the second convex-hull point group can further approach the first convex-hull point group is low even though the moving position of the second convex-hull point group with respect to the first convex-hull point group is searched for again thereafter, resulting in a high probability that it is determined that the identity of the registrant cannot be authenticated in the matching process. Thus, the control unit 10 expects that the identity of the registrant cannot be authenticated, and ends the authentication process procedure RT (Fig. 7).

In this manner, the control unit 10 is configured to omit the process involved from the position alignment to the determination of whether or not the identity of the registrant can be authenticated, by also using an evaluation value serving as a determination factor as to whether or not position alignment has been performed as a determination factor as to whether or not the identity of the registrant can be authenticated.

On the other hand, when it is determined that the current evaluation value is less than the threshold value, the second convex-hull point group exists at a position that is sufficiently close to that of the first convex-hull point group. Thus, the control unit 10 proceeds to the next step, step SP16, in which the control unit 10 moves the other blood-vessel-constituting point group including the second convex-hull point group by the amount of movement between before and after the second convex-hull point group is moved.

Then, when the precise position alignment of the other blood-vessel-constituting point group with respect to the one blood-vessel-constituting point group has not been completed in the next step, step SP5 (Fig. 7), subsequently, in step SP6, the control unit 10 switches the process target from the convex-hull point group to the blood-vessel-constituting point group. Thereafter, in the position alignment process routine SRT, the control unit 10 is configured to precisely align (Fig. 6) the other blood-vessel-constituting point group with respect to the one blood-vessel-constituting point group so that the relative distance (evaluation value) between the one blood-vessel-constituting point group and the other blood-vessel-constituting point group becomes less than the threshold value.

Here, when the position alignment process ends without expecting (Fig. 8: step SP15 (NO)) that the identity of the registrant cannot be authenticated in the process of the rough position alignment (Fig. 5) and precise position alignment (Fig. 6) of the other blood-vessel-constituting point group with respect to the one blood-vessel-constituting point group, the control unit 10 proceeds to step SP7.

In step SP7, the control unit 10 matches each feature point in the one blood-vessel-constituting point group with each feature point in the other blood-vessel-constituting point group, which have been aligned with each other. When a result of the matching indicates that the identity of the registrant can be authenticated, a process that is set to be performed in this case is executed. When the result indicates that the identity of the registrant cannot be authenticated, on the other hand, a process that is set to be performed in this case is executed. Thereafter, the authentication process procedure RT1 ends.

(4) Operations and Advantages

Accordingly, the control unit 10 functions as, when matching a blood-vessel shape pattern extracted from one image with a blood-vessel shape pattern extracted from the other image, a position alignment unit for aligning those images with each other.

In this case, the control unit 10 performs rough position alignment (Fig. 4) on the entirety of a blood-vessel-constituting point group using as a reference, within the blood-vessel-constituting point group, some points (the first convex-hull point group, the second convex-hull point group (Fig. 3)) constituting an outline that reflects the rough shape of the entirety of the blood-vessel-forming point group, and thereafter performs precise position alignment (Fig. 5) on the entirety of the blood-vessel-constituting point group using as a reference all the moved points in the blood-vessel-constituting point group.

Therefore, the control unit 10 can significantly reduce the number of times rotational movement and translation are performed, which is involved for position alignment using as a reference all points in the blood-vessel-constituting point group, as compared with when precise position alignment is performed on the entirety of the blood-vessel-constituting point group without performing rough position alignment using some points in the blood-vessel-constituting point group.

This enables the control unit 10 to reduce the processing time required before position alignment has been performed on a blood-vessel-constituting point group. Here, experimental results are shown in Fig. 9. Fig. 9 is a representation of a comparison between the processing time for the first to third stages, the processing time for the first to fourth stages, and the processing time required for performing only the fourth stage without performing the first to third stages in accordance with an angle (hereinafter referred to as a deviation angle) defined between reference lines of the one blood-vessel-constituting point group and the other blood-vessel-constituting point group. Incidentally, the processing times were measured with MATLAB 7.1 using a computer equipped with Xeon 3.73 [GHz] and 4 [GByte].

In Fig. 9, the processing time required for performing only the fourth stage (the case where precise position alignment is performed on the entirety of a blood-vessel-constituting point group without performing rough position alignment using some points in the blood-vessel-constituting point group) goes on increasing as the deviation angle increases.

On the other hand, the processing time for the first to third stages is constant regardless of the deviation angle, and is much shorter than that when only the fourth stage is performed. One of the possible reasons is that since the number of points used as a reference during position alignment is significantly small, the evaluation value (the sum of the squared distances between the individual points in the second convex-hull point group and the respective points in the first convex-hull point group, which are closest to the individual points) quickly converges into less than the threshold value. Incidentally, in Fig. 3, the blood-vessel-constituting point group has "1037" points while the convex-hull point group has "10" points.

On the other hand, the processing time for the fourth stage itself is also constant regardless of the deviation angle, and is much shorter than that when only the fourth stage is performed. One of the possible reasons is that since rough position alignment has been performed in the previous stages, the evaluation value quickly converges into less than the threshold value.

Therefore, as is also apparent from Fig. 9, the processing time required before position alignment has been performed on a blood-vessel-constituting point group can be reduced as compared with when precise position alignment is performed on the entirety of the blood-vessel-constituting point group without performing rough position alignment using some points in the blood-vessel-constituting point group.

Furthermore, since the control unit 10 can be capable of significantly reducing the number of times rotational movement and the translation are performed, which is involved for position alignment using as a reference all points in a blood-vessel-constituting point group, the amount of accumulation of calculation errors in the movement calculation can also be reduced. Consequently, the position alignment accuracy of the blood-vessel-constituting point group can be improved. Here, Fig. 10 shows an image obtained when only the fourth stage is performed (the case where position alignment is performed on the entirety of a blood-vessel-constituting point group without performing rough position alignment using some points in the blood-vessel-constituting point group).

As is also apparent from the comparison between Figs. 10 and 6, the position alignment accuracy of the blood-vessel-constituting point group can be improved as compared with a case where precise position alignment is performed on the entirety of the blood-vessel-constituting point group without performing rough position alignment using some points in the blood-vessel-constituting point group.

In the control unit 10 in this embodiment, a rough position alignment technique is implemented by adopting a technique of searching for a position at the moving destination of the second convex-hull point group with respect to the first convex-hull point group, by alternately repeating rotational movement and translation, so that the relative distance (the sum of the squared distances between the write points) between the individual points in the second convex-hull point group and the respective points in the first convex-hull point group, which are the closest points to the individual points, becomes minimum, and moving the other blood-vessel-constituting point group including the second convex-hull point group on the basis of the search result.

Therefore, the control unit 10 can perform position alignment without requiring the two-dimensional FFT (Fast Fourier Transform) processing as compared with cross correlation or phase only correlation. In terms of this point, it is particularly useful for incorporation into a portable terminal device with low floating-point calculation capabilities, such as, for example, a mobile phone or a PDA (Personal Digital Assistants).

According to the above configuration, the entirety of a blood-vessel-constituting point group is roughly aligned using as a reference some points in the blood-vessel-constituting point group that constitute an outline reflecting the schematic shape of the blood-vessel-constituting point group, and the entirety of the blood-vessel-constituting point group is precisely aligned using as a reference all the moved points in the blood-vessel-constituting point group. Thus, the number of times rotational movement and the translation are performed, which is involved for position alignment using as a reference all points in the blood-vessel-constituting point group, can be significantly reduced. Accordingly, the authentication device 1 in which processing load can be reduced can be realized.

(5) Other Embodiments

In the embodiment described above, the case where blood vessel is applied as an object has been described. However, the present invention is not limited thereto, and biological identification objects such as, for example, fingerprint, mouthprint, and nerve may also be applied or pictures such as, for example, maps and photographs may also be applied. This implies that the position alignment process performed by the control unit 10 described above can be widely applied to various types of image processing such as the use in pre-processing, intermediate processing, and post-processing in other types of image processing, as well as image processing for use in biometric authentication.

In the embodiment described above, furthermore, the case where all or some of end points, branching points, and bending points (blood-vessel-constituting point group) constituting the center line (blood vessel line) of the object (blood vessel) are extracted has been described. However, the present invention is not limited thereto, and all or some of end points, branching points, and bending points constituting the contour line of the object may be extracted. Specifically, the contour line of the object may be highlighted, and end points, branching points, and bending points constituting the highlighted contour line of the object are extracted. This extraction technique is useful when, for example, pictures such as maps and photographs are applied as objects.

Note that instead of all or some of end points, branching points, and bending points constituting the center line or contour line of the object, all points constituting the center line or contour line may be extracted.

In the embodiment described above, furthermore, the case where, from a set of points (blood-vessel-constituting point group) extracted from an object, a group of points (convex-hull point group) constituting the vertices of a minimal polygon (convex hull) including the set of points (blood-vessel-constituting point group) is detected has been described. However, any other may be detected.

For example, as shown in Fig. 11, a group of points (hereinafter referred to as a minimal circumscribed rectangle point group) adjoining a minimal rectangle including a set of points (a blood-vessel-constituting point group) can be detected. When this minimal circumscribed rectangle point group is applied, in the third stage, for example, as shown in Fig. 12, a technique for roughly aligning the other blood-vessel-constituting point group with respect to the one blood-vessel-constituting point group so that a long axis passing through the center of one minimal circumscribed rectangle point group and a long axis passing through the center of the other minimal circumscribed rectangle point group coincide with each other can be adopted.

Specifically, a counterclockwise rotation angle $\theta_F$-$\theta_P$ (or clockwise rotation angle) of the long axis passing through the center of the other minimal circumscribed rectangle point group with respect to the long axis passing through the center of the one minimal circumscribed rectangle point group is determined, and each point in the other blood-vessel-constituting point group is shifted by this rotation angle. With the adoption of this technique, since the calculation involved in the rotational movement and the translation can be omitted, processing load can further be reduced as compared with the technique in the third stage in the embodiment described above.

In this regard, as in the embodiment described above, a technique for roughly aligning the other blood-vessel-constituting point group with respect to the one blood-vessel-constituting point group so that the relative distances between each point in the one minimal circumscribed rectangle point group and each point in the other minimal circumscribed rectangle point group becomes less than a threshold value can also be adopted.

Furthermore, for example, as shown in Fig. 13, a group of all or some of branching points and bending points in a set of points (blood-vessel-constituting point group) may be detected.

Note that while a convex-hull point group and a minimal circumscribed rectangle point group is taken as examples of a point group constituting an outline in a set of points (blood-vessel-constituting point group) and all or some of branching points and bending points are taken as an example of a point group constituting the substantial shape of the inside in the set of points, those point groups may not necessarily be used.

Alternatively, a combination of point groups constituting the substantial shape of the inside or outside, such as, for example, a combination of a convex-hull point group and all or some of branching points and bending points, or a combination of a minimal circumscribed rectangle point group and all or some of branching points and bending points, may be detected.

In the embodiment described above, furthermore, the case where, from a set of points extracted from an object (blood-vessel-constituting point group), a plurality of points (convex-hull point group) constituting the vertices of a minimal polygon (convex hull) including the set of points (blood-vessel-constituting point group) are detected has been described. However, a detection target may be switched in accordance with a predetermined condition.

For example, a case where a convex-hull point group is applied will be explained. In this case, it is assumed that a convex hull constituted by the convex-hull point group has a regular polygonal shape or a symmetric shape similar thereto. In this case, even if points that are not actual corresponding points are close to each other, the relative distance between the points is less than a threshold value and it is determined that position alignment has been performed. Consequently, position alignment accuracy is reduced.

Therefore, in the first stage, as a condition that a convex hull has a symmetric shape, for example, the control unit 10 determines whether or not the degree of variations in distance between a plurality of straight lines from the convex hull center with respect to the frame of a convex hull constituted by the convex-hull point group is less than a threshold value.

Here, when the degree of variations is equal to or greater than the threshold value, the control unit 10 determines that the convex hull does not have a regular polygonal shape or a shape similar thereto, and starts the process in the second stage. On the other hand, when the degree of variations is less than the threshold value, the control unit 10 determines that the convex hull has a regular polygon shape or a shape similar thereto, and starts the process in the second stage after detecting again the combination of the convex-hull point group and a group of all or some of branching points and bending points in the blood-vessel-constituting point group.

This would reduce the processing load involved in position alignment while maintaining certain position alignment accuracy. Note that although the case where a convex-hull point group is applied has been described, the processing can also be executed in a similar manner in the case of a minimal circumscribed rectangle point group.

In the embodiment described above, furthermore, the case where the relative distance in corresponding points between a point group (first convex-hull point group) detected from a set of points (blood-vessel-constituting point group) extracted from one object and a point group (second convex-hull point group) detected from a set of points (blood-vessel-constituting point group) extracted from the other object is implemented by adopting the sum of squared distances in the corresponding points from the first convex-hull point group has been described. However, the present invention is not limited thereto, and various geometric techniques such as, for example, adopting the average of the distances between the corresponding points, can be used to provide the representation.

In the embodiment described above, furthermore, the case where the position alignment process described above is executed according to a program stored in a ROM has been described. However, the present invention is not limited thereto, and the position alignment process described above may be executed according to a program obtained by installing the program from a program storage medium such as a CD (Compact Disc), a DVD (Digital Versatile Disc), or a semiconductor memory or downloading the program from a program providing server on the Internet.

In the embodiment described above, furthermore, the case where the pattern extraction process and the position alignment process are executed by the control unit 10 has been described. However, the present invention is not limited thereto, and some of those processes may be executed by a graphics workstation.

In the embodiment described above, furthermore, the case where the authentication device 1 having the image capturing function, the matching function, and the registering function is applied has been described. However, the present invention is not limited thereto, and a manner in which each function or some of the individual functions are separately given to a single device in accordance with the use may be applied.

Industrial Applicability

The present invention can be utilized when position alignment of an object is performed in various image processing fields.

## Claims

1. A position alignment method **characterized by** comprising:

   a first step of aligning, using as a reference a group of some points in a first set of points extracted from an object appearing in one image and a group of some points in a second set of points extracted from an object appearing in another image, the second set of points with respect to the first set of points; and
   a second step of aligning, using as a reference all points in the first set of points and all points in the second set of points aligned in the first step, the second set of points with respect to the first set of points.

2. The position alignment method according to Claim 1, **characterized in that** in the first step,
   a position at a moving destination of the group of some points in the second set of points is searched for, by alternately repeating rotational movement and translation, so that a relative distance between the group of some points in the first set of points and the group of some points in the second set of points becomes less than a threshold value, and the second set of points is moved by an amount of movement between the found position at the moving destination and a position before movement.

3. The position alignment method according to Claim 2,
   **characterized in that** the relative distance is also used as a determination standard for determining whether or not an identity of a registrant can be authenticated.

4. The position alignment method according to Claim 2, **characterized in that** in the first step,
   a transformation matrix obtained when a one-dimensionally expanded coordinate system of points before and after movement is represented by a matrix is cumulatively multiplied each time the rotational movement and the translation are performed, and
   when the position at the moving destination is found, a transformation matrix obtained as a multiplication result when the position is found is multiplied by the second set of points.

5. The position alignment method according to Claim 1, **characterized by** further comprising a detecting step of detecting a first point group that constitutes an outline in the first set of points from the first set of points and detecting a second point group that constitutes an outline in the second set of points from the second set of points,
   wherein in the first step,
   the second set of points is aligned with respect to the first set of points using the first point group and the second point group as a reference.

6. The position alignment method according to Claim 5,
   **characterized in that** in the first step,
   when the outline satisfies a condition that the outline has a symmetric shape, a point group that constitutes an outline in the first set of points and a group of all or some points of branching points and bending points in a center line or contour line of the object in the first set of points are detected again as the first point group, and a point group that constitutes an outline in the second set of points and a group of all or some points of branching points and bending points in a center line or contour line of the object in the second set of points are detected again as the first point group.

7. The position alignment according to Claim 1, **characterized by** further comprising a detecting step of detecting a first point group adjoining a minimal rectangle including the first set of points from the first set of points and detecting a second point group adjoining a minimal rectangle including the second set of points from the second set of points,
   wherein in the first step,
   the second set of points is aligned with respect to the first set of points so that a long axis passing through a center of one of the rectangles and a long axis passing through a center of the other rectangle coincide with each other.

8. The position alignment method according to Claim 1, **characterized by** further comprising an extracting step of extracting a biological identification object appearing in an image as lines, and extracting all or some of end points, branching points, and bending points of the lines as a set of points that reflect a feature of the identification object, wherein in the first step,
the second set of points is aligned with respect to the first set of points using as a reference a group of some points in the first set of points extracted from one of the biological identification objects and a group of some points in the second set of points extracted from the other biological identification object.

9. A position alignment device **characterized by** comprising:

 a work memory; and
 a position alignment unit that aligns one input image and another image with each other using the work memory, wherein the position alignment unit
 aligns, using as a reference a group of some points in a first set of points extracted from an object appearing in the one image and a group of some points in a second set of points extracted from an object appearing in the other image, the second set of points with respect to the first set of points, and
 aligns, using as a reference all points in the first set of points and all points in the aligned second set of points, the second set of points with respect to the first set of points.

10. A program **characterized by** causing a position alignment unit that aligns one input image and another image with each other using a work memory to execute:

 aligning, using as a reference a group of some points in a first set of points extracted from an object appearing in the one image and a group of some points in a second set of points extracted from an object appearing in the other image, the second set of points with respect to the first set of points, and
 aligning, using as a reference all points in the first set of points and all points in the aligned second set of points, the second set of points with respect to the first set of points.

FIG. 1

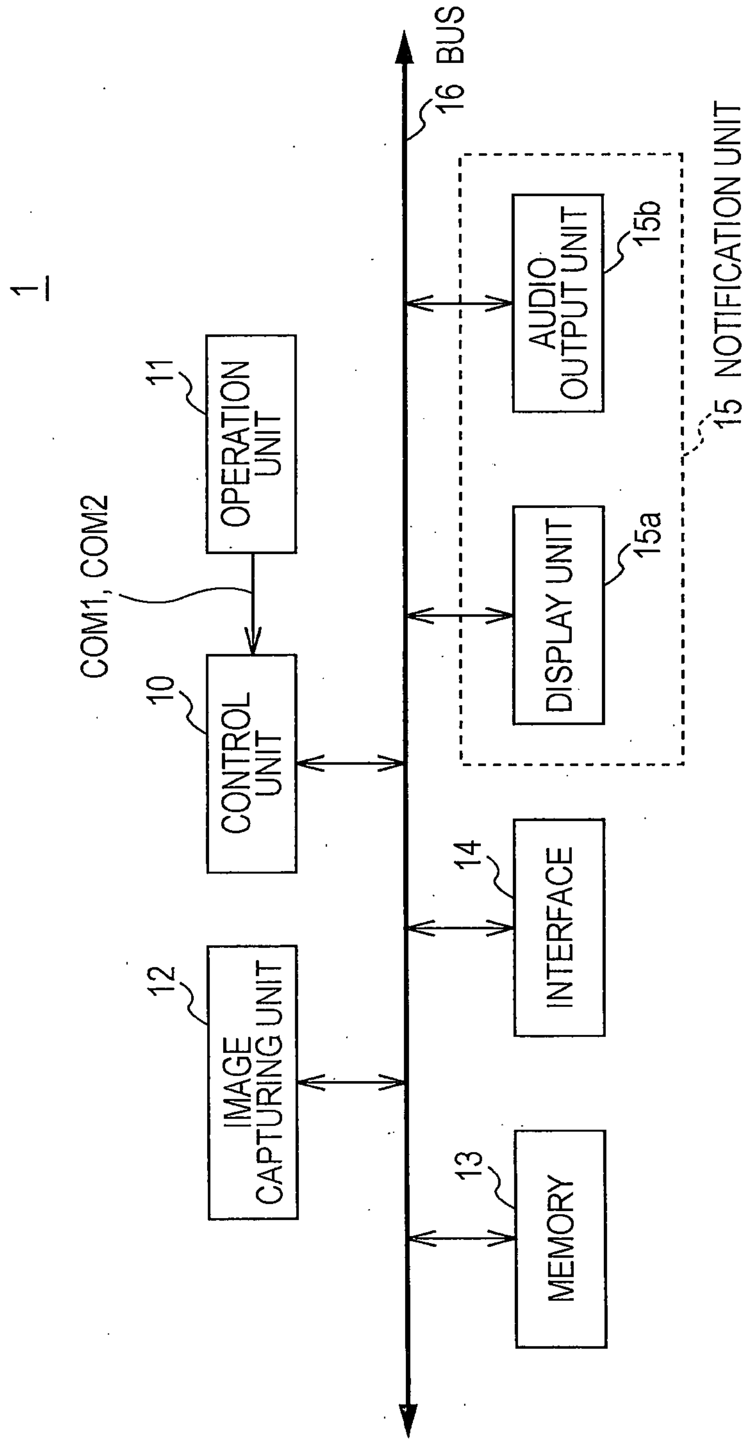
1
11
OPERATION UNIT
COM1, COM2
10
CONTROL UNIT
12
IMAGE CAPTURING UNIT
16 BUS
15b
AUDIO OUTPUT UNIT
15a
DISPLAY UNIT
15 NOTIFICATION UNIT
14
INTERFACE
13
MEMORY

FIG. 2

(A) (B)

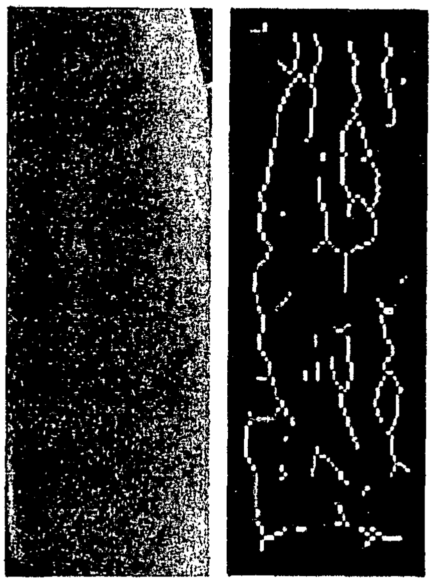

FIG. 3

(A) (B)

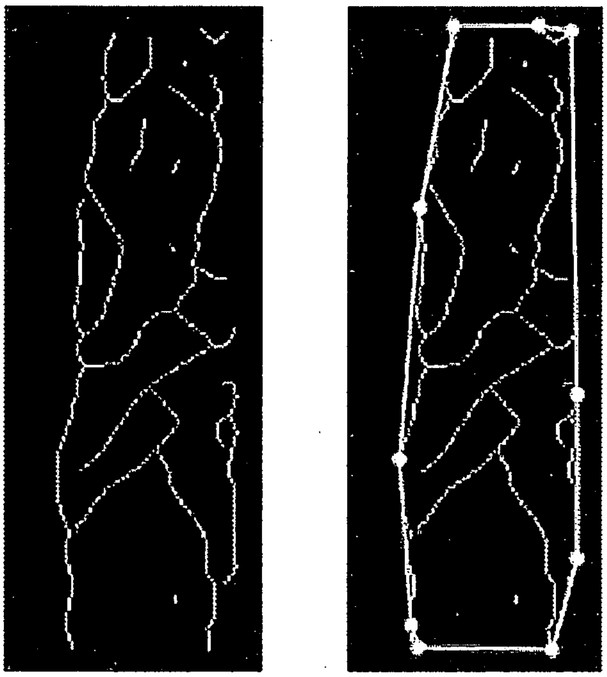

FIG. 4

(A)

(B)

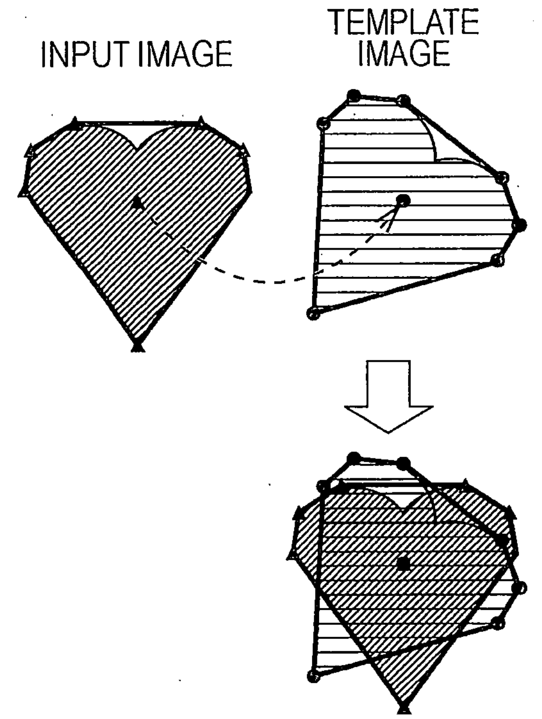

FIG. 5

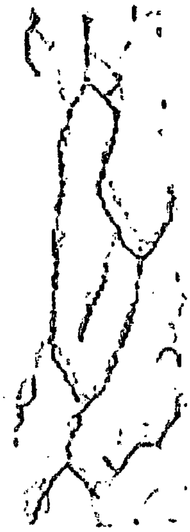

FIG. 6

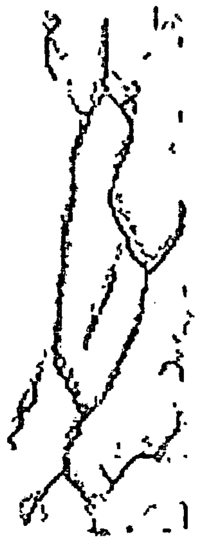

FIG. 7

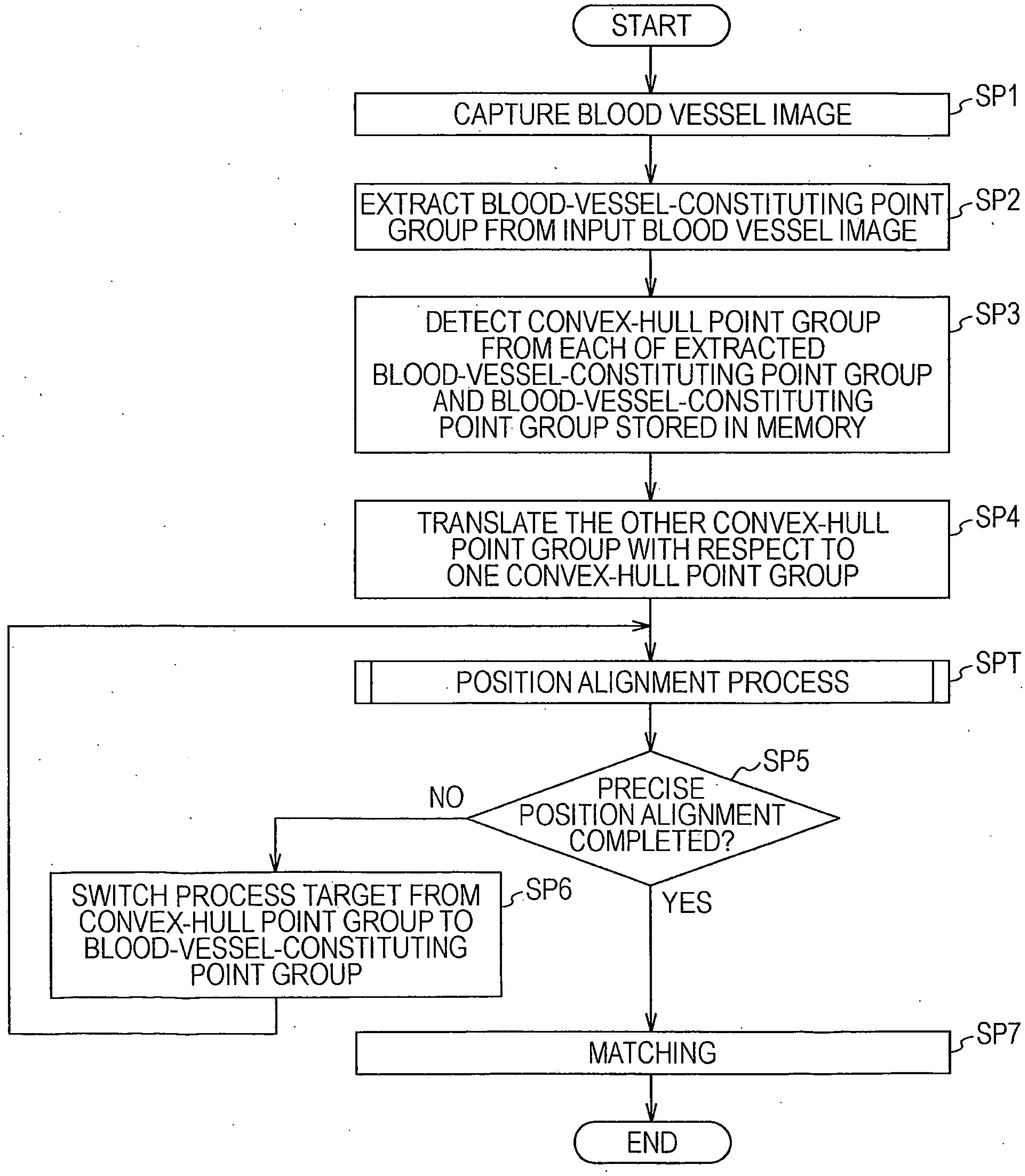
START
CAPTURE BLOOD VESSEL IMAGE
SP1
EXTRACT BLOOD-VESSEL-CONSTITUTING POINT GROUP FROM INPUT BLOOD VESSEL IMAGE
SP2
DETECT CONVEX-HULL POINT GROUP FROM EACH OF EXTRACTED BLOOD-VESSEL-CONSTITUTING POINT GROUP AND BLOOD-VESSEL-CONSTITUTING POINT GROUP STORED IN MEMORY
SP3
TRANSLATE THE OTHER CONVEX-HULL POINT GROUP WITH RESPECT TO ONE CONVEX-HULL POINT GROUP
SP4
POSITION ALIGNMENT PROCESS
SPT
PRECISE POSITION ALIGNMENT COMPLETED?
SP5
NO
SWITCH PROCESS TARGET FROM CONVEX-HULL POINT GROUP TO BLOOD-VESSEL-CONSTITUTING POINT GROUP
SP6
YES
MATCHING
SP7
END

FIG. 8

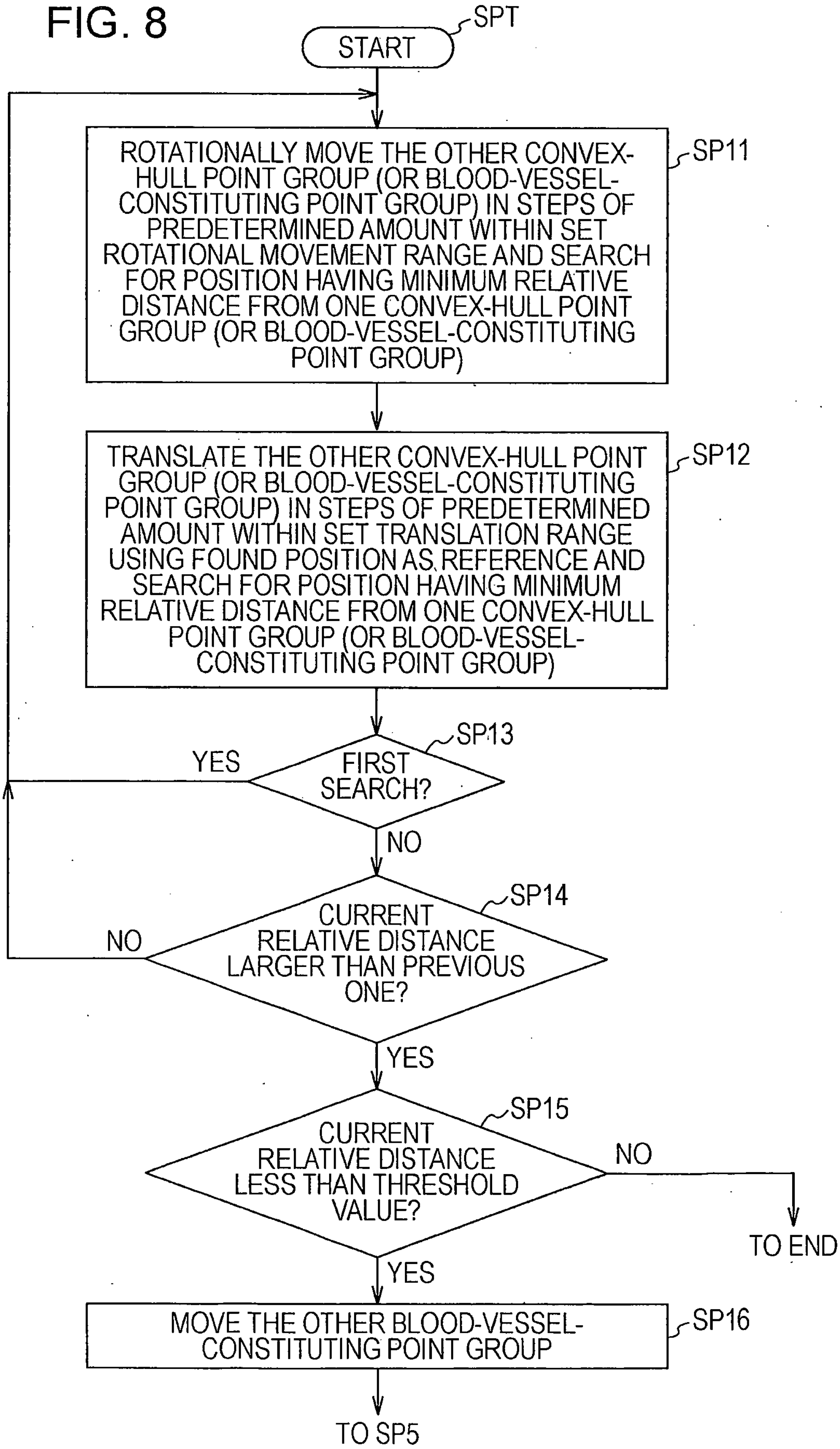
START
SPT
ROTATIONALLY MOVE THE OTHER CONVEX-HULL POINT GROUP (OR BLOOD-VESSEL-CONSTITUTING POINT GROUP) IN STEPS OF PREDETERMINED AMOUNT WITHIN SET ROTATIONAL MOVEMENT RANGE AND SEARCH FOR POSITION HAVING MINIMUM RELATIVE DISTANCE FROM ONE CONVEX-HULL POINT GROUP (OR BLOOD-VESSEL-CONSTITUTING POINT GROUP)
SP11
TRANSLATE THE OTHER CONVEX-HULL POINT GROUP (OR BLOOD-VESSEL-CONSTITUTING POINT GROUP) IN STEPS OF PREDETERMINED AMOUNT WITHIN SET TRANSLATION RANGE USING FOUND POSITION AS REFERENCE AND SEARCH FOR POSITION HAVING MINIMUM RELATIVE DISTANCE FROM ONE CONVEX-HULL POINT GROUP (OR BLOOD-VESSEL-CONSTITUTING POINT GROUP)
SP12
FIRST SEARCH?
SP13
YES
NO
CURRENT RELATIVE DISTANCE LARGER THAN PREVIOUS ONE?
SP14
NO
YES
CURRENT RELATIVE DISTANCE LESS THAN THRESHOLD VALUE?
SP15
NO
TO END
YES
MOVE THE OTHER BLOOD-VESSEL-CONSTITUTING POINT GROUP
SP16
TO SP5

FIG. 9

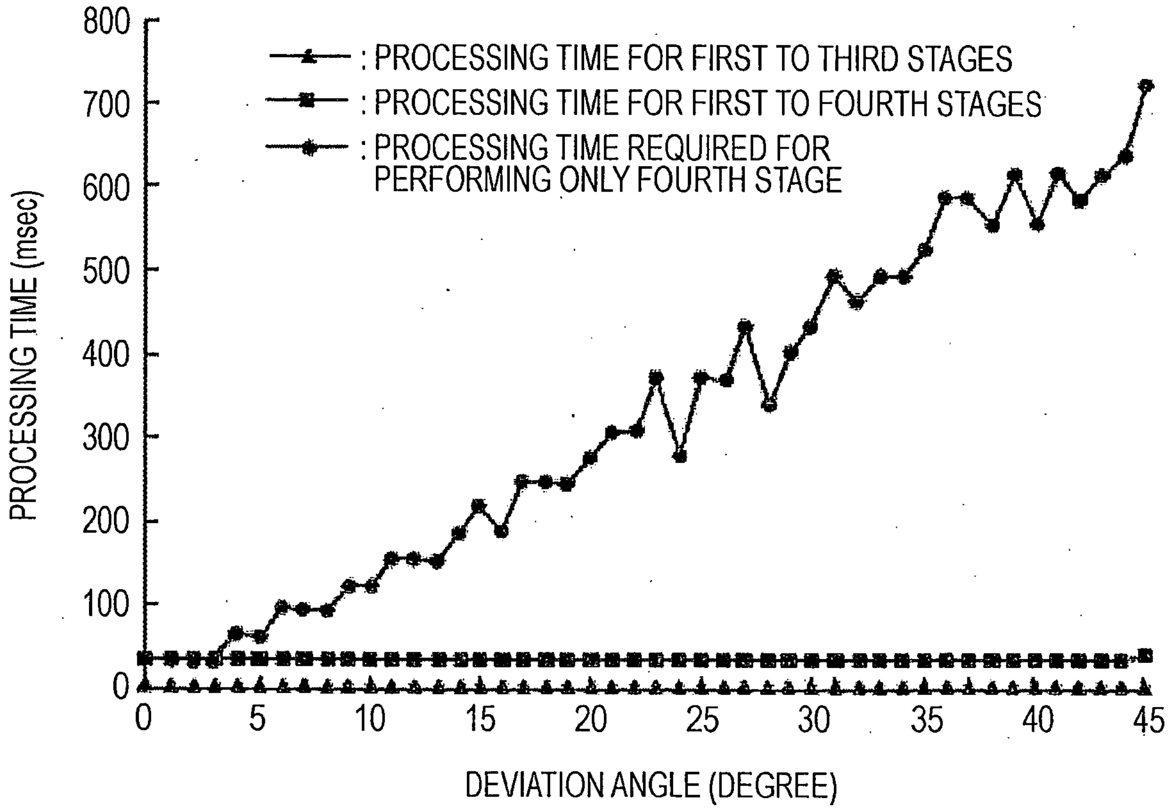
800
700
600
500
400
300
200
100
0
PROCESSING TIME (msec)
: PROCESSING TIME FOR FIRST TO THIRD STAGES
: PROCESSING TIME FOR FIRST TO FOURTH STAGES
: PROCESSING TIME REQUIRED FOR PERFORMING ONLY FOURTH STAGE
0
5
10
15
20
25
30
35
40
45
DEVIATION ANGLE (DEGREE)

FIG. 10

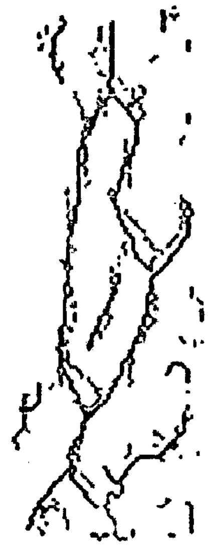

FIG. 11

(A) (B)

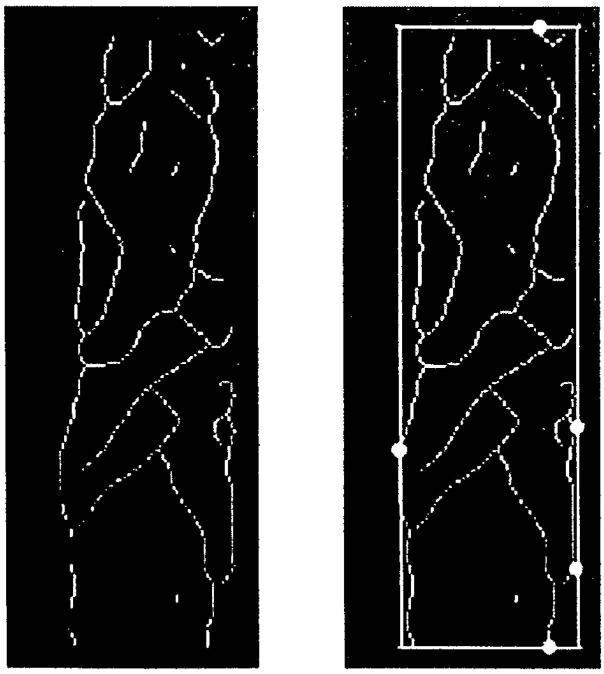

FIG. 12

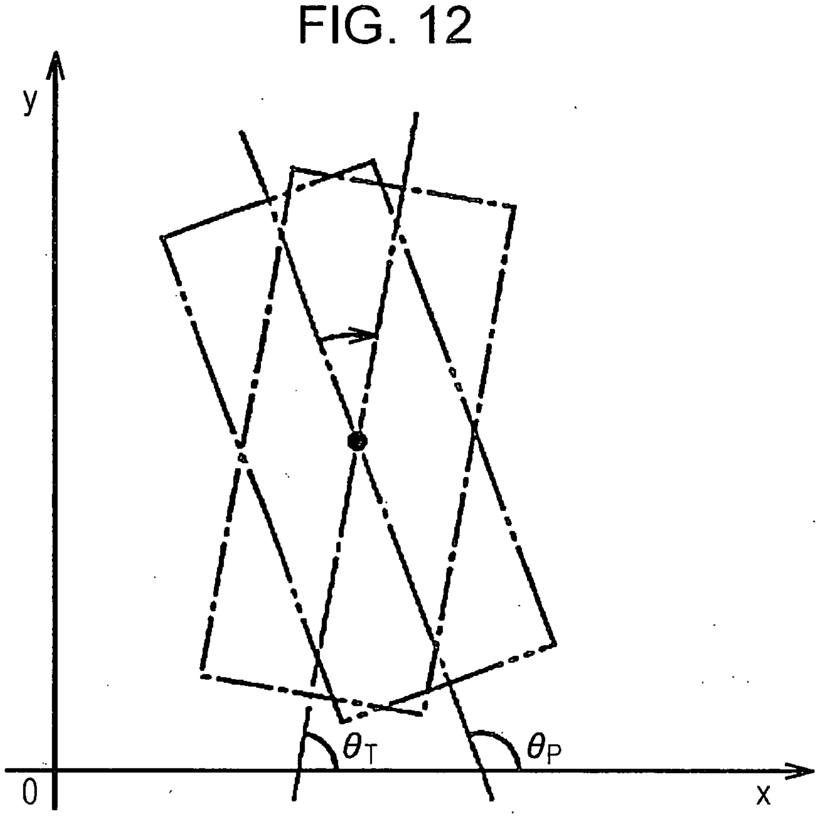


FIG. 13

(A) (B)

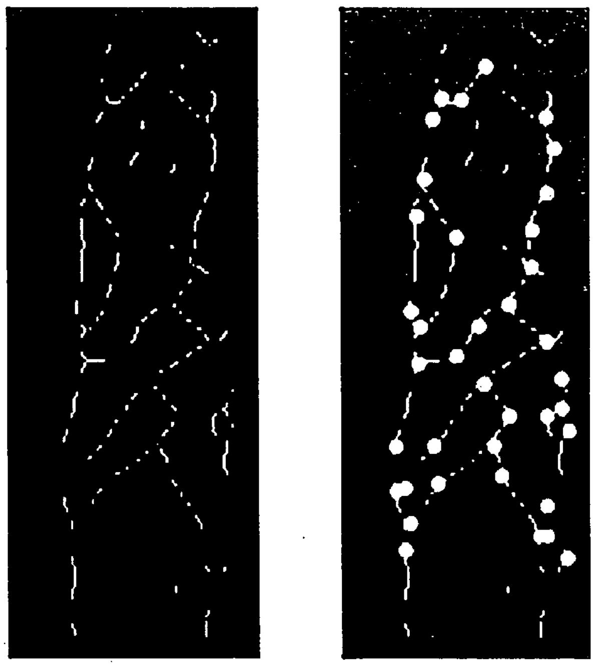

Explanation of Reference Numerals

1 AUTHENTICATION DEVICE, 10 CONTROL UNIT, 11 OPERATION UNIT, 12 IMAGE CAPTURING UNIT, 13 MEMORY, 14 INTERFACE, 15 NOTIFICATION UNIT, 15a DISPLAY UNIT, 15b AUDIO OUTPUT UNIT

**INTERNATIONAL SEARCH REPORT**

International application No.
PCT/JP2008/057380

A. CLASSIFICATION OF SUBJECT MATTER
*G06T7/00*(2006.01)i, *G06F21/20*(2006.01)i

According to International Patent Classification (IPC) or to both national classification and IPC

B. FIELDS SEARCHED

Minimum documentation searched (classification system followed by classification symbols)
G06T7/00, G06F21/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2006-18395 A (Secom Co., Ltd.), 19 January, 2006 (19.01.06), Par. Nos. [0014], [0023] to [0044] (Family: none) | 1-4,8-10<br>5-7 |
| Y | JP 6-28458 A (Fujitsu Ltd.), 04 February, 1994 (04.02.94), Par. Nos. [0022] to [0030] (Family: none) | 1-4,8-10 |
| A | JP 2004-62903 A (Hitachi, Ltd.), 26 February, 2004 (26.02.04), Par. Nos. [0026] to [0039]; Fig. 12 (Family: none) | 1-10 |

☐ Further documents are listed in the continuation of Box C.
☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 May, 2008 (01.05.08) | 13 May, 2008 (13.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006018395 A